# EUROPEAN PATENT SPECIFICATION

(11) **EP 0 778 222 B1**
(45) Date of publication and mention of the grant of the patent: **16.05.2001**
(21) Application number: 96308719.2
(22) Date of filing: 03.12.1996
(51) Int. Cl.: B65D 57/00

(54) **Reusable riser**
Wiederverwendbares Abstandselement
Pièce d'écartement réutilisable

(30) Priority: 04.12.1995 US 567149; 16.02.1996 US 601336
(43) Date of publication of application: 11.06.1997
(73) Proprietor: National Gypsum Properties LLC, Charlotte, North Carolina 28211 (US)
(72) Inventor: Menchetti, Robert John, Buffalo, New York 14223 (US); Finkelstein, Ronald S., East Amherst, New York 14051 (US); Patel, Jashbhai M., Amherst, New York 14226 (US); Winkowski, Daniel A., Tonawanda, New York 14150 (US)
(74) Representative: Darby, David Thomas

(56) References cited:
- WO-A-95/10013
- FR-A- 1 300 898
- FR-A- 2 430 369
- US-A- 2 998 132
- US-A- 4 221 292

## Description

### Field and Background of the Invention

This invention relates to risers or spacers for supporting sheet-like material, such as units of gypsum board.

During shipping and storage, it is common practice to assemble sheet-like material into units and strap the sheets together. For example, gypsum board is normally strapped in units containing about thirty to fifty sheets. Two sheets of gypsum board are fastened together by tape to form a bundle, and a number of bundles form a unit. It is customary to place each unit on a plurality of risers (also known as spacers), the purpose being to provide open spaces under the unit, into which the fork of a lift truck may be inserted. The risers also hold a unit off of a damp floor or other support surface.

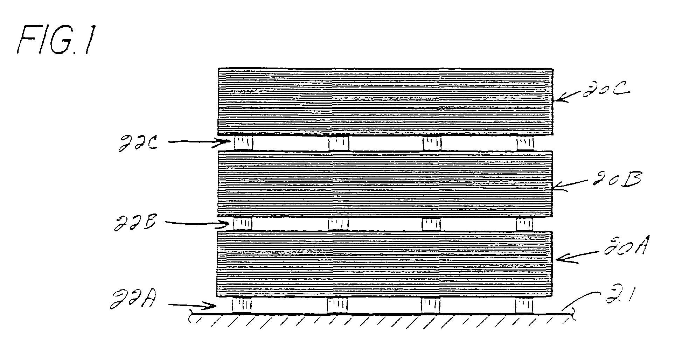

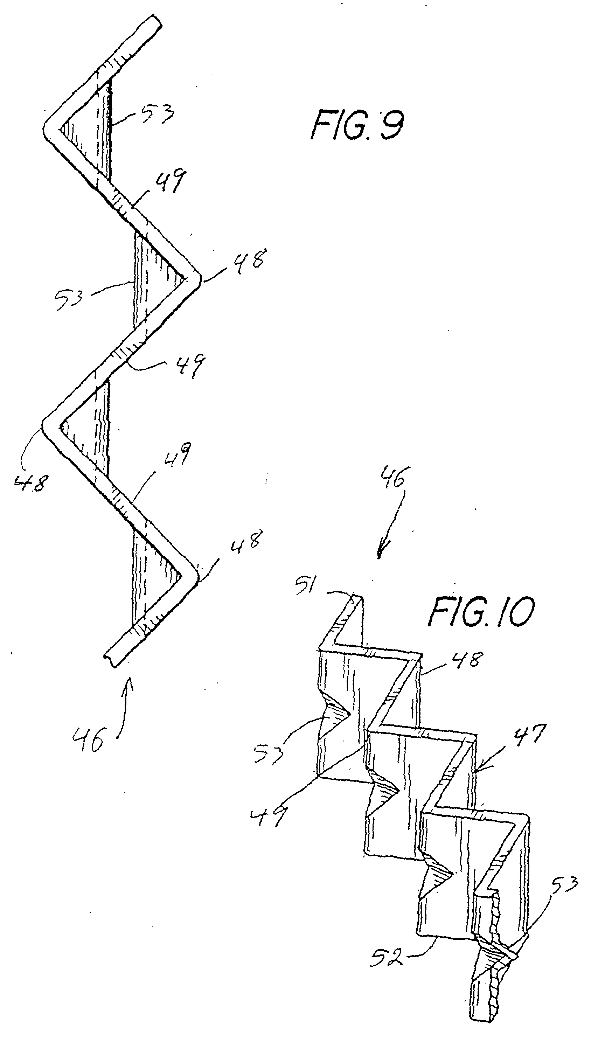

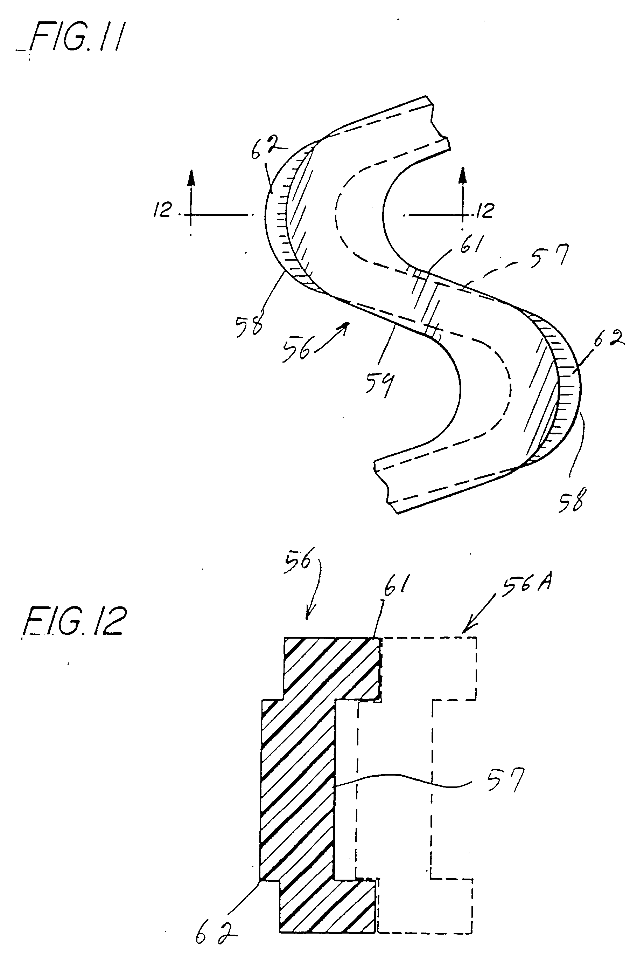

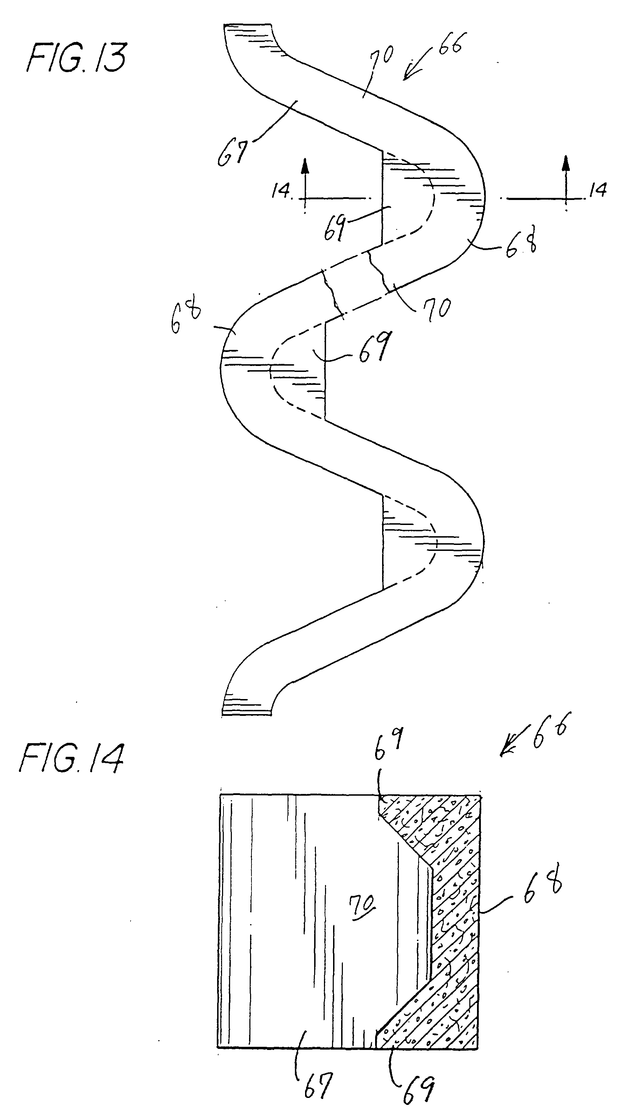

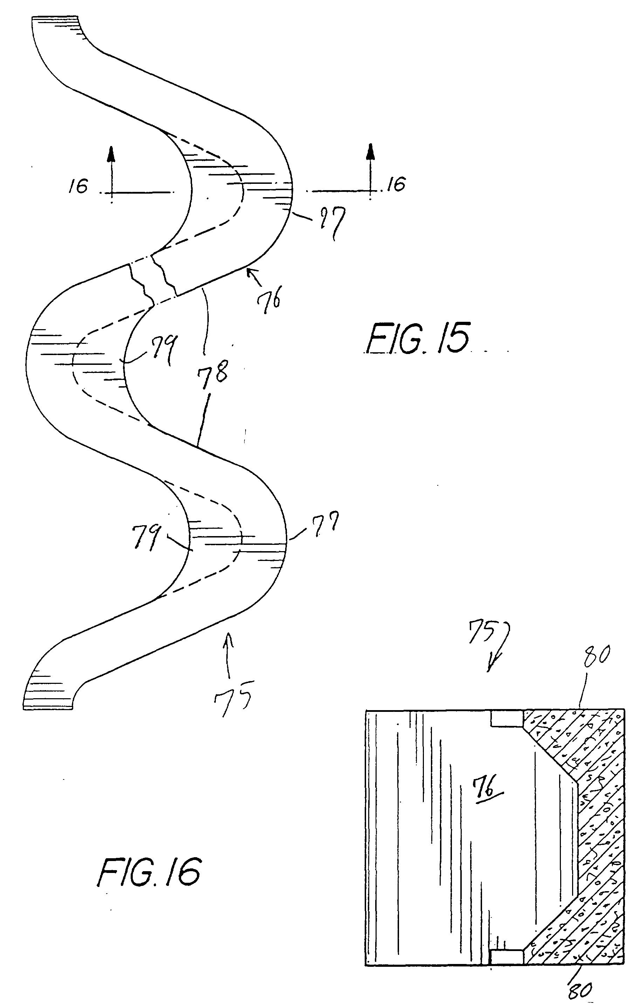

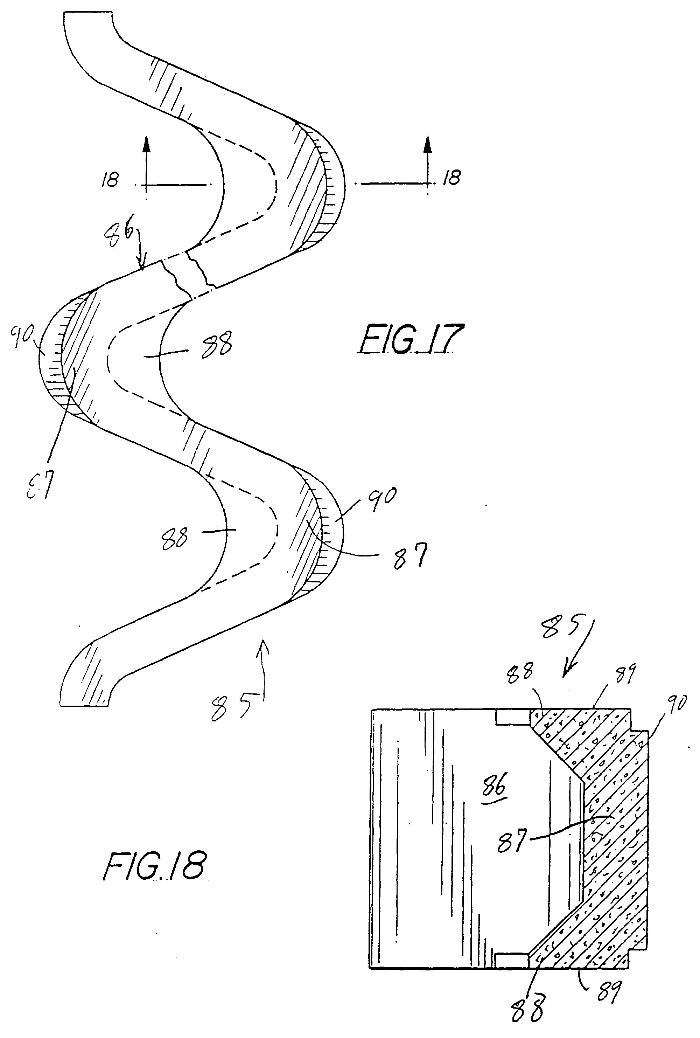

Fig. 1 illustrates such an arrangement. In this example, three units 20A, 20B and 20C are stacked and supported on a floor 21. Three sets of risers 22A, 22B and 22C are positioned under the units 20A, 20B and 22C respectively, and form open spaces below the units and between adjacent risers. In a warehouse, up to about ten units may be stacked one on another in a column. Straps are not shown in Fig. 1 but normally the sheets of each unit are secured together by straps.

At the present time, it is customary to use pieces of gypsum board for the risers. Narrow strips of waste gypsum board are cut and four or five strips are stacked to form a riser which is about four inches wide and two to three inches high. When dealing with four by eight foot sheets of gypsum board, usually four risers are used as shown in Fig. 1, each riser being four feet long. In the case of four by twelve foot sheets, six risers are often provided. The gypsum board strips are usually discarded to a landfill after a single use.

Due to considerations of expense and environmental concerns regarding landfills, permanent or reusable risers constructed of an alternative material such as wood or plastic have also been provided.

Regardless of the type of material, it is desirable to keep the thickness of the risers relatively small in order to minimize the amount of material needed and the expense. At the same time, the risers must be relatively sturdy to prevent buckling when a number of units are stacked on one another. Another consideration is that a reusable riser should be capable of being compactly stacked or nested because, to be reusable, the risers need to be readily stacked and shipped to a location where they may be put to use. Another important consideration is that the contact area between the risers and the sheet material being supported must be above at least a certain value, depending on the compressive strength of material being supported, to prevent the risers from forming a substantial imprint in the adjacent sheet.
It is therefore a general object of the present invention to provide an improved riser design for sheet material, which makes efficient use of material, has good compressive strength, requires relatively little space for storage and shipping, and has dimensions which substantially avoid an imprint in the adjacent sheet.
U.S. Patent No. 4 221 292 describes a riser formed of a metal strip folded into a sinusoidal or square-waved shape; the edges of the strip may be folded over to present a smoother surface to the supporting material or that being supported. The disclosure of WO95/10013 is similar, the strip being folded into a zigzag; the edges may be folded partway to form a flange to increase the contact area.
The present invention provides a riser in accordance with claim 1, claim 17 or claim 26, and their respective dependent claims.
A group of risers are nestable whereby they may be compactly stacked for storage and/or shipping. The edge surfaces have a surface area sufficient to avoid forming a substantial imprint in the article.

### Brief Description of the Drawings

The invention will be better understood from the following detailed description taken in conjunction with the accompanying figures (in which there are no Figures Nos. 2 to 8) of the drawings, wherein:
Fig. 1 illustrates a prior art assembly of units of boards separated by risers;
Fig. 9 is a plan view of a first form of riser constructed in accordance with the invention.
Fig. 10 is a perspective view of the riser shown in Fig. 9;
Fig. 11 is a plan view showing another form of the riser;
Fig. 12 is a sectional view taken on the line 12-12 of Fig. 11;
Fig. 13 is a plan view of a further form of the riser;
Fig. 14 is a sectional view taken on the line 14-14 of Fig. 13;
Fig. 15 is a plan view showing a further form of the riser;
Fig. 16 is a sectional view taken on the line 16-16 of Fig. 15;
Fig. 17 is a plan view of a still further form of the riser;
Fig. 18 is a sectional view taken on the line 18-18 of Fig. 17;
Fig. 19 is a plan view of still another form of the riser;
Fig. 20 is a sectional view taken on the line 20-20 of Fig. 19;
Fig. 21 is a sectional view taken on the line 21-21 of Fig. 19;
Fig. 22 is a sectional view taken on the line 22-22 of Fig. 19;
Fig. 23 shows a plurality of nested risers constructed as shown in Fig. 19;
Fig. 24 shows a plurality of risers on sheet material; Fig. 25 is a sectional view taken on the line 25-25 of Fig. 24;
Fig. 26 is a sectional view taken on the line 26-26 of Fig. 24;
Fig. 27 is a sectional view taken on the line 27-27 of Fig. 28 and shows another form of the riser; and
Fig. 28 is a sectional view taken on the line 28-28 of Fig. 27.

### Detailed Description of the Invention

As used herein, the term riser (or spacer) is distinguished from pallet which includes a relatively broad upper platform or support member. The platform or support member is able to carry a plurality of separate articles such as pans or boxes. On the other hand, a plurality of separate risers are placed under a relatively large article such as a sheet material.

As discussed previously, Fig. 1 illustrates a plurality of units 20A, 20B, and 20C of boards which are separated by and stacked upon sets of risers 22A, 22B, and 22C. In a typical arrangement of this nature in the prior art, each riser is an elongated strip approximately 63.5 mm (2-1/2 inches) high and between 88.9 and 101.6 mm (3-1/2 and 4 inches) wide. Normally, the risers are vertically aligned so that the weight is applied in a vertical direction directly through the risers. The surface area at the upper and lower sides of each riser should be sufficiently large to minimize the imprint made on the boards of the units, due to the weight of the units. For example, risers having a width of 101.6 mm (four inches) will have surface areas of 1015.96 cm² per metre (48 square inches per foot) on its top and bottom sides. In the typical instance where the risers are made of pieces of gypsum board, a riser may consist of four strips of 15.9 mm (5/8 inch) thick gypsum board or five strips of 12.7 mm (1/2 inch) thick gypsum board, producing in each instance a riser that is 63.5 mm (2-1/2 inches) high. In the example illustrated in Fig. 1, each unit is 1.22 metres by 2.44 metres (4' by 8') and four risers, each having a length of about 1.22 metres (four feet), are positioned under each unit.

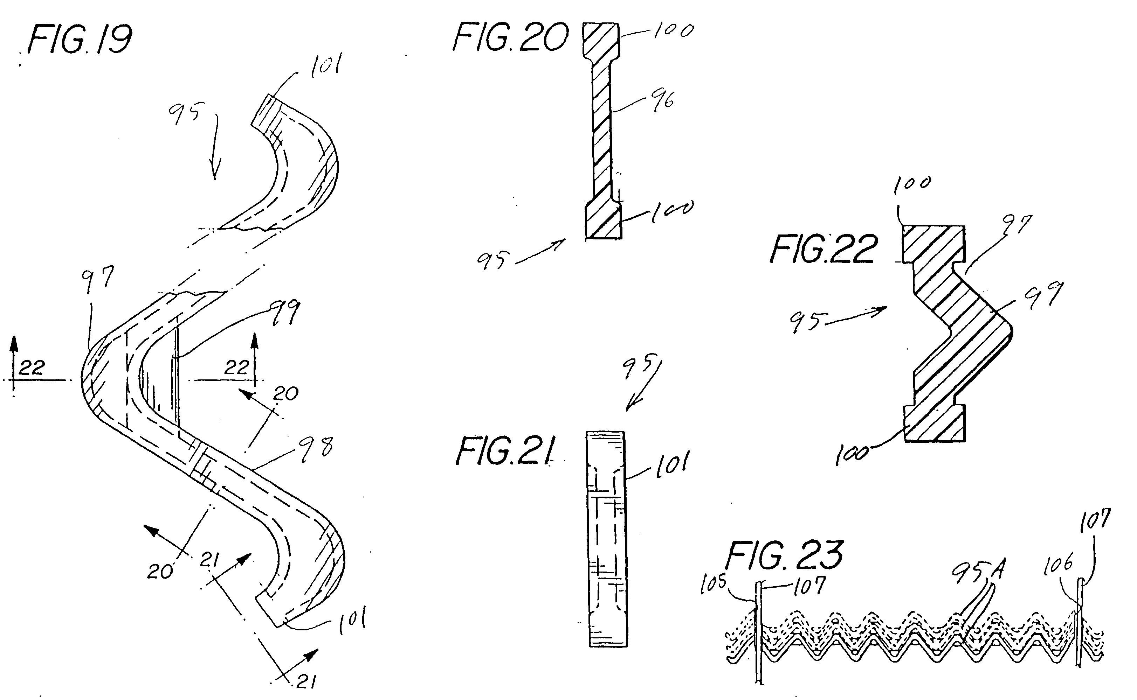

Figs. 9 and 10 illustrate a riser 46 constructed in accordance with the invention which is formed by a web 47 having alternating ridges 48 and slopes 49. As shown in Fig. 10, the web 47 has a substantially constant thickness between its upper and lower edge surfaces 51 and 52. Strengthening means is provided at each of the ridges 48 in the form of a gusset 53 which is formed substantially midway between the two edge surfaces 51 and 52 and is formed on the internal sides of the ridges 48. As best illustrated in Fig. 9, the gussets 53 connect the ridges 48 with the sides of the slopes 49, and they add strength to the web to prevent buckling. Nevertheless, the riser 46 is nestable because the gussets fit one within the other when the risers are nested. It will also be noted that the ridges 48 are relatively sharp or pointed (i.e. peaks) and that the slopes 49 are relatively straight.

The riser 56 illustrated in Figs. 11 and 12 is also formed by a web 57 having a corrugated or sinusoidal shape. The web 57 includes ridges 58 and slopes 59. At the slopes 59, the web 57 is widened or thickened. The thickened width portions are indicated by the numeral 61 in Figs. 11 and 12. At the ridges 58, the web extends outwardly from the widenings or thickenings 61 to form projections 62 at the outside radiuses. The projections 62 in combination with the widened portions 61 form strengthening means for the web, and, of course, the widened portions 61 form relatively large edge surface areas which engage the boards. Fig. 12 further illustrates the manner in which two of the risers 56 may nest when stacked. A second riser 56A is shown by the dashed lines.

Figs. 13 and 14 illustrate a riser 66 including a web 67 having substantially a sine wave shape. The web 67 has a substantially constant cross sectional size and shape except at the ridges or peaks 68 where projections 69 are formed at the upper and lower edges. The projections 69 extend inwardly and join each peak with the inner sides of the adjoining slopes 70. The projections 69 serve both to add strength to the web at the peaks and to increase the edge surface area.

Figs. 15 and 16 show a riser 75 which is generally similar to the riser 66 shown in Figs. 13 and 14. The riser 75 includes a generally sinusoidal web 76 which forms ridges 77 and slopes 78. On the inner radius of the ridges 77 are formed projections 79 which extend inwardly from the ridges at the upper and lower edge surfaces 80. The projections 79 are curved and merge smoothly into the slopes 78.

Figs. 17 and 18 show a riser 85 formed by a web 86 again having a generally sinusoidal shape. At the ridges 87 are formed projections 88 which extend inwardly from the inner sides of the ridges at the upper and lower edge surfaces 89. In addition, a projection 90 is formed on each ridge, each projection extending outwardly from the center area of the web. As is true of the other embodiments described herein, a plurality of the risers 85 may be nested closely together for storage or shipment.

Figs. 19 to 22 show a riser 95 formed by a web 96 having a generally sinusoidal shape. At the ridges 97, the web is thickened compared to the thickness at the slopes 98 (compare Figs. 20 and 22). Further, gussets 99 are formed at the inner radius of the ridges, at the center of the web. Still further, the edge portions 100 are widened at the upper and lower edges, as best shown in Figs. 20 and 22. At the ends 101 (see Figs. 19 and 21) of the riser, the entire vertical length of the web is thickened.

Fig. 23 illustrates a stack of the risers 95A, the risers 95A nesting with one another as shown and as previously described herein. The risers 95A have substantially the same configuration as the risers 95. In addition, the risers 95A have at least one hole formed through the web, the holes being aligned when the risers 95A are nested. In the example shown in Fig. 23, holes 105 are formed through the web adjacent one end of each riser 95A, and a second hole 106 is formed through the web adjacent the other end. Rods 107 are inserted through the holes 105 and 106, and the rods may be used to suspend the risers 95A from a hanger (not shown). While two holes and rods are shown, only one hole and one rod may be provided. The rods also serve to hold the risers in neatly assembled relation, and they may be used when transporting a stack of risers.

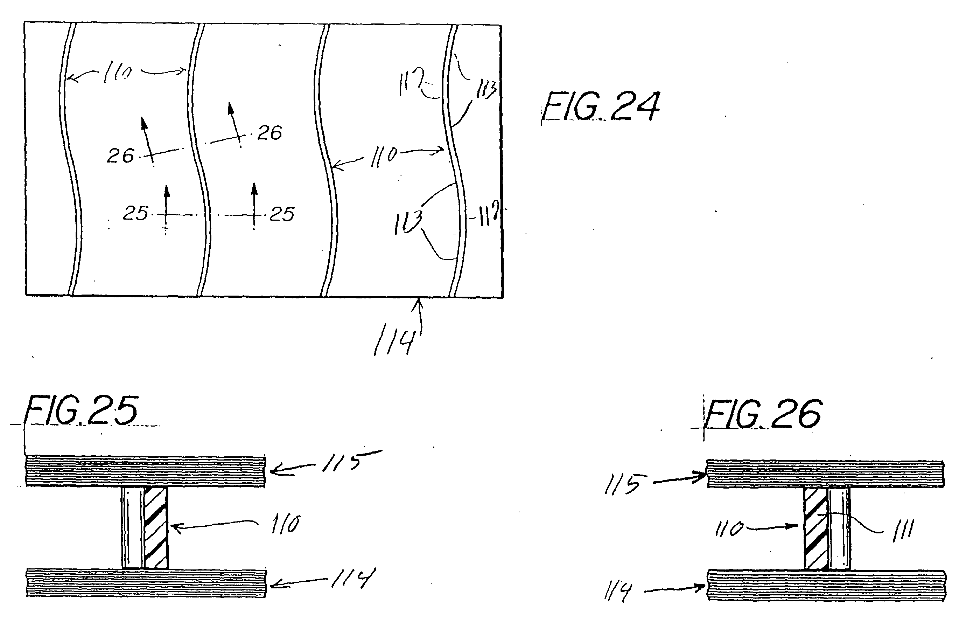

The above-described risers all include a plurality of sine waves or folds. The risers 110 shown in Figs. 24 to 26 are a more simplified design wherein a web 111 has a substantially constant cross-sectional shape and size throughout its length. Further, the web 111 forms only two ridges 112 and two slopes 113 on each side of each ridge. While the web 111 forms a smoothly curving sine wave shape, the web could instead form relatively pointed ridges and straight slopes as illustrated in Figs. 9 and 10. Fig. 24 shows four risers 110 on a unit 114 of 1.22 metres by 2.44 metres (4' by 8') boards or sheets, and Figs. 25 and 26 show the risers separating two units 114 and 115.

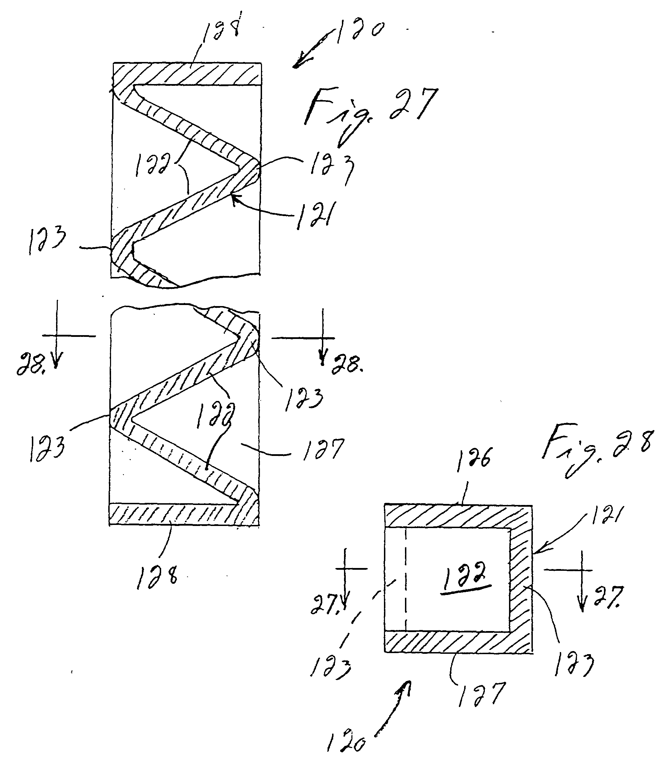

Figs. 27 and 28 illustrate another riser 120 including a web 121 having a series of slopes 122 and ridges 123 which are connected to form a corrugated or sine wave shape. Like the riser shown in Figs. 7 and 8, the web 121, when in use, is positioned with the flat sides of the slopes 122 extending vertically, and flanges 126 and 127 form widened edge portions at the top and bottom edges of the web. Each of the flanges 126 and 127 is in the shape of a rectangular plate (see Fig. 27) which extends horizontally across the edges of the slopes 122 and the peaks 123. While they are not essential, end plates 128 extend vertically across the ends of the riser between the flanges 126 and 127.

The riser 120 is preferably molded of a plastic material such as a plastic foam, or of wood chips, with the web 121 merging with the flanges 126 and 127 and with the end plates 128 to form a unitary member.

As mentioned previously, the risers may be made of a variety of materials, such as pressed wood chips, various plastics, molded gypsum, pressed cardboard, pressed paper, metal, and composites of various materials. Recycled waste gypsum wallboard may be processed and combined with a strengthening and/or bonding agent and molded to a shape in accordance with this invention. As examples of a composite riser, a styrofoam layer sandwiched between two strips of gypsum and glued together with a formulated recycled gypsum paste, or a polyurethane foam sandwiched between two strips of gypsum and glued as described above may be used. A polyfoam and/or a polymer may also be used.

The material used in the riser should have a compressive strength at least as high as the compressive load exerted on the riser by the material to supported.

As previously mentioned, the risers according to the invention are positioned on edge so that the plane of the web is substantially vertical. The aggregate surface area of the portions of the set of risers in contact with the board or boards is sufficient to avoid a substantial imprint on the board surface. It will be apparent that the required surface area depends on the compressive strength of the boards, the weight and number of boards and the numbers of risers positioned between a unit of boards.

As a specific example, assume that the boards are 4' by 12' by 1/2" (1.22 x 3.66 m x 4cm) high density gypsum board, that there are 34 boards in a unit, and that ten is the number of units in a stack. The foregoing is often encountered when storing gypsum board. Normally, a set of six risers are provided under such boards, each riser having a length of substantially four feet (1.22 m)

High density gypsum board has, typically, a compressive strength of about 375 psi (2.58 mPa). The total weight often units of high density gypsum board is about 32,640 pounds (14.8 tonnes), and this is the weight supported by the lowermost set of risers. The weights supported by risers which are higher in the stack are, of course, less. Since there are six risers in the set, and since the four risers toward the center support a greater proportion of the load than the two endmost risers, the maximum weight on a riser is about 6,528 pounds (2.96 tonnes). In these circumstances, the minimum surface area of each edge of each riser is about 17.5 square inches (320 sq cm). However, it is preferred that a safety factor of at least two should be present; further, accommodation should be made for the fact that the board surfaces are not always flat, and that parts of a riser may support a greater weight than other parts. To provide an adequate safety factor a preferred minimum edge surface area on each edge of a riser is 60 square inches (387 sq cm).

As another example, low density gypsum board has a typical compressive strength of 200 psi (1.38 mPa); the weight often units (34 such boards in each unit) is about 28,560 pounds (12.95 tonnes); and six risers are provided, each riser having a length of four feet. A preferred minimum edge surface area of each edge of a riser in these circumstances of 60 square inches (387 sq cm) results in a compression of about 95 psi (0.655 mPa) which again provides a safety factor of slightly over two.

Other materials may have a higher compressive strength, and consequently the risers may be thinner. Cementitious/gypsum board, for example, has a strength of about 3,500 psi (24 mPa) and therefore the edge surface area of each riser may be nearly one-tenth that of the riser for gypsum board (assuming the same number of risers).

In all of the embodiments described herein, the risers are designed for use with gypsum board and have the preferred minimum edge surface area. For smaller size boards, fewer risers may be used and still meet the preferred minimum surface area. Four risers in a set may be used with 4' by 8' x 1/2" (1.22 x 2.44 m x 4 cm) gypsum boards, and five risers in a set may be used with 4' x 10' x 1/2" (1.22 x 3.05 m x 4 cm) gypsum board.

Further, since the risers are positioned on edge, the distance in the horizontal direction between the peaks of adjacent ridges of a riser should be at least a minimum value to avoid the chance that a riser will tip over. It is preferred that the distance in the horizontal direction between ridges (measured perpendicular to the length of the riser) be at least 40% of the vertical height of the riser.

It will be apparent from the foregoing that an improved riser design has been provided. Risers in accordance with this invention may be made, for example, of recycled or waste material and may be reused. The risers are preferably nestable to facilitate storage and shipping. It is an important feature that a riser in accordance with this invention has one or more folds so that it may be positioned on edge and is not likely to tip over. The fold or folds form a continuous strip which does not have an end (except at the ends of the riser) which may be exposed to a high compressive force. At the ends of each riser, there may be a reduced compressive force because of a tapered reduction in thickness adjacent the edges of sheet material (as is usually true of gypsum board) or because of a designed recess adjacent the side edges of a sheet material. In other words, each portion, such as a ridge, of a riser in accordance with this invention is supported on each side by adjoining slopes, and these parts served to support each other when under a high compressive force.

## Claims

1. A riser (56,66,75,85) for supporting an article, comprising a web (57,67,76,86) having a height, thickness and length, said length being substantially greater than said height and said thickness, and said height being greater than said thickness, said web having first and second parallel edge surfaces (80,89) which are spaced apart in the direction of said height and having two sides which are spaced apart in the direction of said thickness, said web comprising a fold which forms at least one ridge (58,68,77,87) and at least one slope (59,70,78) adjoining said ridge, said fold extending laterally in the direction of said sides and said first and second edge surfaces being in substantially flat parallel planes, whereby an article positioned against one of said edge surfaces causes a compressive force in the direction of said height and wherein said sides at said ridge provide an outer ridge surface and an inner ridge surface, characterized in having first and second projections (61,69,79,88) extending from said inner ridge surface, each of said first and second projections decreasing in size in a direction toward said slope, said first projection being adjacent said first edge surface and said second projection being adjacent said second edge surface, said projections providing engagement between the riser and a second, similarly shaped, adjacent, riser (56A) on nesting the riser and the second riser.

2. A riser as set forth in claim 1, wherein said web has a plurality of substantially identical folds.

3. A riser as set forth in claim 1 or claim 2, wherein said fold has the shape of a sine wave and said ridge is curved.

4. A riser as set forth in claim 1 or claim 2, wherein said fold forms a relatively sharp corner at said ridge.

5. A riser as set forth in any one of claims 1 to 4, wherein said web includes thick portions adjacent its edges (40,41), said thick portions being formed by increased thickness adjacent said edges.

6. A riser as set forth in claim 5, wherein said web comprises a plurality of said ridges and said slopes, and said thick portions extend along said ridges and said slopes.

7. A riser as set forth in claim 5 or claim 6, wherein said thick portion at each of said edges comprises a substantially rectangular plate.

8. A riser as set forth in any one of claims 1 to 7, wherein said web includes a projection (62,90) extending from said outer ridge surface.

9. A riser as set forth in any one of claims 1 to 7, made of a plastic.

10. A riser as set forth in any one of claims 1 to 7, made of pressed wood particles.

11. A riser as set forth in any one of claims 1 to 7, made of a molded composite of gypsum and a plastic or made of a composite of gypsum and a strengthening binder.

12. A riser as set forth in any one of claims 1 to 7, made of molded gypsum.

13. A riser as set forth in any one of claims 1 to 7, made of metal.

14. A riser as set forth in any one of claims 1 to 13 having a compressive strength at least as high as the compressive force exerted on said riser by the articles.

15. A riser as set forth in any one of claims 1 to 14, wherein said edges have a surface area sufficient to avoid a substantial imprint in the article.

16. An assembly comprising a plurality of risers as claimed in any one of claims 1 to 15 and an article having a substantially flat bottom surface resting directly on and supported by said risers, said risers being positioned with said sides substantially vertical and one of said edge surfaces engaging said article.

17. A riser (46,95) for supporting an article, comprising a web (47,96) having a height, thickness and length, said length being substantially greater than said height and said thickness, and said height being greater than said thickness, said web (47) having two parallel edges (51,52,100) which are spaced apart in the direction of said height and having two sides which are spaced apart in the direction of said thickness, said web (47) comprising at least one fold which forms at least one ridge (48,97) and at least one slope (49,98) adjoining said ridge, said fold extending laterally of the direction of said sides, and said edges being in spaced apart substantially flat parallel planes, whereby an article positioned against one of said edges (51,52) causes a compressive force in the direction of said height, said sides at said ridge (48) providing an outer surface and an inner surface, characterized in having a gusset (53,99) extending from said inner ridge surface between said edges.

18. A riser as set forth in claim 17, wherein said web includes projections adjacent said edges, said projections extending from said outer surface.

19. An assembly comprising a plurality of risers as set forth in claim 17 or claim 18 and an article having a substantially flat bottom surface resting directly on and supported by said risers, said risers being positioned with said sides extending substantially vertically and with one of said edges engaging said article.

20. An assembly as set forth in claim 19, wherein said plurality of risers are substantially identical.

21. An assembly as set forth in claim 19 or claim 20, wherein said assembly comprises a plurality of boards (27) stacked one on top of another, the lowermost of said board (27) engaging said plurality of risers (46).

22. An assembly as set forth in any one of claims 19 to 21, wherein the boards comprise gypsum boards.

23. An assembly as set forth in any one of claims 19 to 22, wherein each of said risers has an edge surface area in engagement with said article, and the aggregate of said edge surface areas of said plurality of risers is so related to the weight of said article that the compressive strength of said article is not exceeded.

24. An assembly as set forth in any one of claims 19 to 23, wherein said compressive strength is substantially double the pressure of said article on said risers.

25. An assembly as set forth in any one of claims 19 to 24, wherein said article and said risers are made of substantially the same material.

26. A riser (120) for supporting an article, comprising a web (121) having a height, thickness and length, said length being substantially greater than said height and said thickness, and said height being greater than said thickness, said web (121) having two parallel edges which are spaced apart in the direction of said height and having two sides which are spaced apart in the direction of said thickness, said web (121) comprising at least one fold which forms at least one ridge (123) and at least one slope (122) adjoining said ridge, said fold extending laterally of the direction of said sides, and said edges being in spaced apart substantially flat parallel planes, whereby an article positioned against one of said edges causes a compressive force in the direction of said height, said sides at said ridge (123) providing an outer surface and an inner surface, characterized in that said riser (120) comprises vertically spaced upper and lower flange portions (126, 127) in the form of rectangular plates extending horizontally across and connected to the edges of said web (121), said upper flange portion (126) being operable to engage said bottom surface and said lower flange portion (127) being operable to engage a support surface.

27. An assembly comprising a plurality of risers as claimed in claim 26 and an article having a substantially flat bottom surface resting directly on and supported by said risers, said risers being positioned with said sides substantially vertical and said upper flange portion (126) engaging said article.

## Patentansprüche

1. Abstandselement (56,66,75,85) zum Tragen eines Gegenstandes, mit einem Steg (57,67,76,86), der eine Höhe, Dicke und Länge aufweist, wobei die Länge wesentlich größer als die Höhe und die Dicke ist und die Höhe größer als die Dicke ist, wobei der Steg erste und zweite parallele Kantenflächen (80,89) aufweist, die in die Richtung der Höhe voneinander beabstandet sind, und zwei Seiten aufweist, die in die Richtung der Dicke voneinander beabstandet sind, wobei der Steg einen Falz aufweist, der mindestens einen Grat (58,68,77,87) und mindestens eine an den den Grat angrenzende Neigung (59, 70,78) bildet, wobei sich der Falz lateral in die Richtung der Seiten erstreckt, und sich die ersten und zweiten Kantenflächen in im wesentlichen ebenen parallelen Ebenen befinden, wodurch ein Gegenstand, der gegen eine der Kantenflächen angeordnet ist, eine Druckkraft in die Richtung der Höhe bewirkt, und wobei die Seiten an dem Grat eine äußere Gratoberfläche und eine innere Gratoberfläche bereitstellen, dadurch gekennzeichnet, daß sie erste und zweite Vorsprünge (61,69,79,88) aufweisen, die sich von der inneren Gratoberfläche erstrecken, wobei jeder der ersten und zweiten Vorsprünge in eine Richtung zur Neigung hin in ihrer Größe abnimmt, wobei der erste Vorsprung benachbart der ersten Kantenfläche ist und der zweite Vorsprung benachbart der zweiten Kantenfläche ist, wobei die Vorsprünge einen Eingriff zwischen dem Abstandselement und einem zweiten, ähnlich geformten, benachbarten Abstandselement (56A) beim Ineinanderschachteln des Abstandselements und des zweiten Abstandselements bereitstellen.

2. Abstandselement nach Anspruch 1, wobei der Steg mehrere im wesentlichen identische Falze aufweist.

3. Abstandselement nach Anspruch 1 oder 2, wobei der Falz die Form einer Sinuswelle aufweist und der Grat gekrümmt ist.

4. Abstandselement nach Anspruch 1 oder 2, wobei der Falz eine verhältnismäßig scharfe Ecke an dem Grat bildet.

5. Abstandselement nach einem der Ansprüche 1 bis 4, wobei der Steg benachbart zu seinen Kanten (40,41) dicke Abschnitte aufweist, wobei die dicken Abschnitte durch eine benachbart zu den Kanten erhöhte Dicke gebildet werden.

6. Abstandselement nach Anspruch 5, wobei der Steg mehrere der Grate und der Neigungen aufweist, und sich die dicken Abschnitte längs den Graten und den Neigungen erstrecken.

7. Abstandselement nach Anspruch 5 oder 6, wobei der dicke Abschnitt an jeder der Kanten eine im wesentlichen rechteckige Scheibe aufweist.

8. Abstandselement nach einem der Ansprüche 1 bis 7, wobei der Steg einen Vorsprung (62,90) aufweist, der sich von der äußeren Gratoberfläche erstreckt.

9. Abstandselement nach einem der Ansprüche 1 bis 7, das aus einem Kunststoff besteht.

10. Abstandselement nach einem der Ansprüche 1 bis 7, das aus gepreßten Holzteilchen besteht.

11. Abstandselement nach einem der Ansprüche 1 bis 7, das aus einem geformten Verbundstoff aus Gips und einem Kunststoff besteht oder aus einem Verbundstoff aus Gips und einem verstärkenden Bindemittel besteht.

12. Abstandselement nach einem der Ansprüche 1 bis 7, das aus geformten Gips besteht.

13. Abstandselement nach einem der Ansprüche 1 bis 7, das aus Metall besteht.

14. Abstandselement nach einem der Ansprüche 1 bis 13, das eine Druckfestigkeit aufweist, die mindestens so hoch wie die Druckkraft ist, die durch die Gegenstände auf das Abstandselement ausgeübt wird.

15. Abstandselement nach einem der Ansprüche 1 bis 14, wobei die Kanten einen ausreichenden Oberflächenbereich aufweisen, um einen wesentlichen Eindruck im Gegenstand vermeiden.

16. Aufbau mit mehreren Abstandselementen nach einem der Ansprüche 1 bis 15 und einem Gegenstand mit einer im wesentlichen ebenen Bodenfläche, der direkt auf den Abstandselementen ruht und von ihnen getragen wird, wobei die Abstandselemente so angeordnet sind, daß die Seiten im wesentlichen vertikal sind und eine der Kantenflächen an den Gegenstand angreift.

17. Abstandselement (46,95) zum Tragen eines Gegenstandes mit einem Steg (47,96), der eine Höhe, Dicke und Länge aufweist, wobei die Länge wesentlich größer als die Höhe und die Dicke ist, und die Höhe größer als die Dicke ist, wobei der Steg (47) zwei parallele Kanten (51,52,100) aufweist, die in die Richtung der Höhe voneinander beabstandet sind, und zwei Seiten aufweist, die in die Richtung der Dicke voneinander beabstandet sind, wobei der Steg (47) mindestens einen Falz aufweist, der mindestens einen Grat (46,97) und mindestens eine an den Grat angrenzende Neigung (49,98) bildet, wobei sich der Falz lateral der Richtung der Seiten erstreckt, und sich die Kanten in voneinander beabstandeten, im wesentlichen ebenen parallelen Ebenen befinden, wodurch ein Gegenstand, der gegen eine der Kanten (51,52) angeordnet ist, eine Druckkraft in die Richtung der Höhe bewirkt, wobei die Seiten an dem Grat (48) eine Außenfläche und eine Innenfläche bereitstellen, dadurch gekennzeichnet, daß sie ein Winkelstück (53,99) aufweisen, das sich von der inneren Gratoberfläche zwischen den Kanten erstreckt.

18. Abstandselement nach Anspruch 17, wobei der Steg benachbart zu den Kanten Vorsprünge aufweist, wobei sich die Vorsprünge von der Außenfläche erstrecken.

19. Aufbau mit mehreren Abstandselemente nach Anspruch 17 oder 18 und einem Gegenstand mit einer im wesentlichen ebenen Bodenfläche, der direkt auf den Abstandselementen ruht und von ihnen getragen wird, wobei die Abstandselemente so angeordnet sind, daß die Seiten sich im wesentlichen vertikal erstrecken und eine der Kanten an den Gegenstand angreift.

20. Aufbau nach Anspruch 19, wobei die mehreren Abstandselemente im wesentlichen identisch sind.

21. Aufbau nach Anspruch 19 oder 20, wobei der Aufbau mehrere Platten (27) aufweist, die aufeinander gestapelt sind, wobei die unterste der Platten (27) mit den mehreren Abstandselementen (46) in Eingriff steht.

22. Aufbau nach einem der Ansprüche 19 bis 21, wobei die Platten Gipsplatten aufweisen.

23. Aufbau nach einem der Ansprüche 19 bis 22, wobei jedes der Abstandselemente einen Kantenflächenbereich aufweist, der an den Gegenstand angreift, und die Gruppe der Kantenflächenbereiche der mehreren Abstandselemente so zum Gewicht des Gegenstandes in Beziehung steht, daß die Druckfestigkeit des Gegenstandes nicht überschritten wird.

24. Aufbau nach einem der Ansprüche 19 bis 23, wobei die Druckfestigkeit im wesentlichen das Doppelte des Druckes des Gegenstandes auf die Abstandselemente beträgt.

25. Aufbau nach einem der Ansprüche 19 bis 24, wobei der Gegenstand und die Abstandselemente im wesentlichen aus demselben Material bestehen.

26. Abstandselement (120) zum Tragen eines Gegenstandes mit einem Steg (121), der eine Höhe, Dicke und Länge aufweist, wobei die Länge wesentlich größer als die Höhe und die Dicke ist und die Höhe größer als die Dicke ist, wobei der Steg (121) zwei parallele Kanten aufweist, die in die Richtung der Höhe voneinander beabstandet sind, und zwei Seiten aufweist, die in die Richtung der Dicke voneinander beabstandet sind, wobei der Steg (121) mindestens einen Falz aufweist, der mindestens einen Grat (123) und mindestens eine an den Grat angrenzende Neigung (122) bildet, wobei sich der Falz lateral der Richtung der Seiten erstreckt, und sich die Kanten in voneinander beabstandeten, im wesentlichen ebenen parallelen Ebenen befinden, wodurch ein Gegenstand, der gegen eine der Kanten angeordnet ist, eine Druckkraft in die Richtung der Höhe bewirkt, wobei die Seiten des Grates (123) eine Außenfläche und eine Innenfläche bereitstellen, dadurch gekennzeichnet, daß das Abstandselement (120) vertikal beabstandete obere und untere Flanschabschnitte (126, 127) in der Form rechteckiger Scheiben aufweist, die sich horizontal über die Kanten des Stegs (121) erstrecken und mit ihnen verbunden sind, wobei der obere Flanschabschnitt (126) betriebsfähig ist, an die Bodenfläche anzugreifen, und der untere Flanschabschnitt (127) betriebsfähig ist, an eine Tragefläche anzugreifen.

27. Aufbau mit mehreren Abstandselementen nach Anspruch 26 und einem Gegenstand mit einer im wesentlichen ebenen Bodenfläche, die direkt auf den Abstandselementen ruht und von ihnen getragen wird, wobei die Abstandselemente so angeordnet sind, daß die Seiten im wesentlichen vertikal sind und der obere Flanschabschnitt (126) an den Gegenstand angreift.

## Revendications

1. Ecarteur (56, 66, 75, 85) pour soutenir un objet, comprenant une bande (57, 67, 76, 86) présentant une hauteur, une épaisseur et une longueur, ladite longueur étant essentiellement supérieure à ladite hauteur et à ladite épaisseur et ladite hauteur étant supérieure à ladite épaisseur, ladite bande présentant une première et une deuxième surface de bord parallèles (80, 89) espacées l'une de l'autre dans la direction de ladite hauteur et présentant deux côtés espacés l'un de l'autre dans la direction de ladite épaisseur, ladite bande comprenant un pli qui forme au moins une arête (58, 68, 77, 87) et au moins une pente (59, 70, 78) jointive à ladite arête, ledit pli s'étendant latéralement par rapport à la direction desdits côtés, et ladite première et ladite deuxième surface de bord étant situées dans des plans parallèles essentiellement plans, grâce à quoi un objet placé contre l'une desdites surfaces de bord exerce une force de compression dans la direction de ladite hauteur et lesdits bords situés sur ladite arête fournissent une surface extérieure d'arête et une surface intérieure d'arête, caractérisé en ce qu'il présente une première et une deuxième saillie (61, 69, 79, 88) partant de ladite surface intérieure d'arête, chacune parmi ladite première et ladite deuxième saillie diminuant de taille dans une direction allant vers ladite pente, ladite première saillie étant contiguë à ladite première surface de bord et ladite deuxième saillie étant contiguë à ladite deuxième surface de bord, lesdites saillies fournissant un engagement entre l'écarteur et un deuxième écarteur contigu, de forme similaire (56A) lorsque l'écarteur et le deuxième écarteur sont emboîtés.

2. Ecarteur selon la revendication 1, dans lequel ladite bande présente une pluralité de plis essentiellement identiques.

3. Ecarteur selon la revendication 1 ou la revendication 2, dans lequel ledit pli a la forme d'une onde sinusoïdale, et ladite arête est incurvée.

4. Ecarteur selon la revendication 1 ou la revendication 2, dans lequel ledit pli forme un coin relativement accusé sur ladite arête.

5. Ecarteur selon l'une quelconque des revendications 1 à 4, dans lequel ladite bande comprend des parties épaissies adjacentes à ses bords (40, 41), lesdites parties épaissies étant formées par une augmentation de l'épaisseur en position contiguë auxdits bords.

6. Ecarteur selon la revendication 5, dans lequel ladite bande comprend une pluralité desdites arêtes et desdites pentes, et lesdites parties épaissies s'étendent le long desdites arêtes et desdites pentes.

7. Ecarteur selon la revendication 5 ou la revendication 6, dans lequel ladite partie épaissie de chacun desdits bords comprend une plaque essentiellement rectangulaire.

8. Ecarteur selon l'une quelconque des revendications 1 à 7, dans lequel ladite bande comprend une saillie (62, 90) partant de ladite surface extérieure d'arête.

9. Ecarteur selon l'une quelconque des revendications 1 à 7, réalisé en matière plastique.

10. Ecarteur selon l'une quelconque des revendications 1 à 7, réalisé en particules de bois comprimées.

11. Ecarteur selon l'une quelconque des revendications 1 à sept, réalisé en composite moulé de gypse et de plastique ou constitué d'un composite de gypse et d'un liant de renfort.

12. Ecarteur selon l'une quelconque des revendications 1 à 7, réalisé en gypse moulé.

13. Ecarteur selon l'une quelconque des revendications 1 à 7, réalisé en métal.

14. Ecarteur selon l'une quelconque des revendications 1 à 13, présentant une résistance en compression au moins aussi élevée que la force de compression exercée sur ledit écarteur par les objets.

15. Ecarteur selon l'une quelconque des revendications 1 à 14, dans lequel lesdits bords ont une superficie suffisante pour éviter essentiellement de laisser des empreintes sur l'objet.

16. Ensemble comprenant une pluralité d'écarteurs selon l'une quelconque des revendications 1 à 15 et un objet présentant une surface de base essentiellement plane reposant directement sur lesdits écarteurs et soutenu par eux, lesdits écarteurs étant positionnés avec lesdits côtés essentiellement à la verticale et l'une desdites surfaces de bord engageant ledit objet.

17. Ecarteur (46, 95) pour soutenir en objet, comprenant une bande (47, 96) présentant une hauteur, une épaisseur et une longueur, ladite longueur étant essentiellement supérieure à ladite hauteur et à ladite épaisseur, et ladite hauteur étant supérieure à ladite épaisseur, ladite bande (47) présentant deux bords parallèles (51, 52, 100) espacés l'un de l'autre dans la direction de ladite hauteur et présentant deux côtés espacés l'un de l'autre dans la direction de ladite épaisseur, ladite bande (47) comprenant au moins un pli qui forme au moins une arête (48, 97) et au moins une pente (49, 98) jointive à ladite arête, ledit pli s'étendant latéralement par rapport à la direction desdits côtés, et lesdits bords étant situés dans des plans parallèles essentiellement plans, espacés l'un de l'autre, tandis qu'un objet placé contre l'un desdits bords (51, 52) exerce une force de compression dans la direction de ladite hauteur, lesdits côtés situés sur ladite arête (48) fournissant une surface extérieure et une surface intérieure, caractérisé en ce qu'il présente un gousset (53, 99) qui part de ladite surface intérieure d'arête entre lesdits bords.

18. Ecarteur selon la revendication 17, dans lequel ladite bande comprend des saillies contiguës auxdits bords, lesdites saillies partant de ladite surface extérieure.

19. Ensemble comprenant une pluralité d'écarteurs selon la revendication 17 ou la revendication 18, et un objet présentant une surface de base essentiellement plane reposant directement sur lesdits écarteurs et soutenu par eux, lesdits écarteurs étant disposés avec lesdits côtés s'étendant essentiellement à la verticale et avec l'un desdits bords engageant ledit objet.

20. Ensemble selon la revendication 19, dans lequel ladite pluralité d'écarteurs sont essentiellement identiques.

21. Ensemble selon la revendication 19 ou la revendication 20, dans lequel ledit ensemble comprend une pluralité de panneaux (27) empilés l'une au-dessus de l'autre, le plus bas de ces panneaux (27) engageant ladite pluralité d'écarteurs (46).

22. Ensemble selon l'une quelconque des revendications 19 à 21, dans lequel les panneaux comprennent des panneaux en gypse.

23. Ensemble selon l'une quelconque des revendications 19 à 22, dans lequel chacun desdits écarteurs présente une superficie de surface de bord en engagement sur ledit objet, et l'agrégat desdites de surface de bord de ladite pluralité d'écarteurs est relié au poids dudit objet de telle sorte que la résistance en compression dudit objet ne soit pas dépassée.

24. Ensemble selon l'une quelconque des revendications 19 à 23, dans lequel ladite résistance en compression est essentiellement le double de la pression exercée par ledit objet sur lesdits écarteurs.

25. Ensemble selon l'une quelconque des revendications 19 à 24, dans lequel ledit objet et lesdits écarteurs sont réalisés essentiellement en le même matériau.

26. Ecarteur (120) pour soutenir un objet, comprenant en panneau (121) présentant une hauteur, une épaisseur et une longueur, ladite longueur étant essentiellement supérieure à ladite hauteur et à ladite épaisseur, et ladite hauteur étant supérieure à ladite épaisseur, ladite bande (121) présentant deux bords parallèles espacés l'un de l'autre dans la direction de ladite hauteur et présentant deux côtés espacés l'un de l'autre dans la direction de ladite épaisseur, ladite bande (121) comprenant au moins un pli qui forme au moins une arête (123) et au moins une pente (122) jointive à ladite arête, ledit pli s'étendant latéralement par rapport à la direction desdits côtés et lesdits bords étant situés dans des plans parallèles essentiellement plans espacés l'un de l'autre, grâce à quoi un objet placé contre l'un desdits bords exerce une force de compression dans la direction de ladite hauteur, lesdits bords situés sur ladite arête (123) fournissant une surface extérieure et une surface intérieure, caractérisé en ce que ledit écarteur (120) comprend des parties de bride inférieure et de bride supérieure (126, 127) espacées dans le sens vertical, qui ont la forme de plaques rectangulaires qui s'étendent horizontalement à travers les bords de ladite bande (121) et leur sont reliés, ladite partie de bride supérieure (126) pouvant être actionnée pour engager ladite surface de base et ladite partie de bride inférieure (127) pouvant être actionnée pour engager une surface de soutien.

27. Ensemble comprenant une pluralité d'écarteurs selon la revendication 26 et un objet présentant une surface de base essentiellement plane reposant directement sur lesdits écarteurs et soutenu par eux, lesdits écarteurs étant disposés avec lesdits côtés essentiellement verticaux et ladite partie de bride supérieure (126) engageant ledit objet.
